Europäisches Patentamt

(19) European Patent Office

Office européen des brevets

(11) Publication number: **0 139 057**
**B1**

# EUROPEAN PATENT SPECIFICATION

(45) Date of publication of patent specification: **18.01.89**

(51) Int. Cl.⁴: **G 01 H 9/00**

(21) Application number: **83306458.7**

(22) Date of filing: **25.10.83**

(54) An optical vibration analyser.

(43) Date of publication of application:
**02.05.85 Bulletin 85/18**

(45) Publication of the grant of the patent:
**18.01.89 Bulletin 89/03**

(84) Designated Contracting States:
**DE FR GB**

(56) References cited:
**WO-A-79/00841
US-A-4 071 753**

**ELECTRONIC ENGINEERING, vol. 46, no. 362,
December 1974, pages 18,19, London, GB; C.H.
AGREN: "Photoelectric vibration probe for
string instruments"**

**PATENTS ABSTRACTS OF JAPAN, vol. 6, no.
217(P-152)(1095), 30th October 1982; & JP - A -
57 120 827 (TOKYO SHIBAURA DENKI K.K.)
28-07-1982**

(73) Proprietor: **International Business Machines
Corporation
Old Orchard Road
Armonk, N.Y. 10504 (US)**

(72) Inventor: **Chaplin, Russell
22 Peartree Road
Dibden Purlieu Hants, S04 5AL (GB)**

(74) Representative: **Appleton, John Edward
IBM United Kingdom Limited Intellectual
Property Department Hursley Park
Winchester Hampshire SO21 2JN (GB)**

Courier Press, Leamington Spa, England.

**Description**

This invention relates to improvements in optical vibration analysers.

Vibration analysis in products which contain a high speed rotating part from the size of an electric generator to a magnetic disc file used in data processing is an important part of the development process. In magnetic disc files the speeds of rotation and the flying height of the read/write heads are such that unwanted vibration of the order of a few (2-4) can cause malfunction of the product.

The publication on page 18 of Electronic Engineering Dec 1974 describes a probe intended for the study of the vibrating behaviour of stringed instruments. However it uses a probe with a wide angle of view that restricts its use to a nonlinear or less sensitive working point on its distance-input current scale.

Japanese Patent Abstracts 57-120827 describes a vibrameter which measures the vibrations of a spring system using a fixed probe. A reflection plate has to be attached to the spring and a weight acts as an imobile point. Obvious disadvantages when trying to measure the vibration of a rotating moving surface.

The publication "Mechanical Vibration Measurements Using a Fibre Optic Laser-Doppler Probe" by R A Cookson and P Bandyopadhyay in Optics and Laser Technology pp 33-36, February 1978 summarizes the developments of vibration analysis techniques from the use of strain gauges, the double pulsed holographic system to the laser-Doppler process. The publication proposes an extension of the laser-Doppler technique by using a flexible fibre optic probe to enable the analysis of vibrating parts not directly visible.

A similar scheme is described in Optics Communication Vol. 23, No. 3, December 1977 pp 407-409 in the article "Flexible Coherent Optical Probe for Vibration Measurement" by Ueha, Shibata and Tsujiuchi.

The use of a laser-Doppler process has several disadvantages. Take mounting of the laser itself requires an optical bench and the machine being investigated must be held rigidly in relation to the laser. A laser is an expensive piece of equipment. The present invention has the advantage that no optical bench or expensive optical devices are required, the vibration probe can be hand-held and the device under investigation need not be moved or touched.

According to the invention there is provided:

an optical analyser for measuring vibration of the order 2-4 microns, including a fibre optic probe having a predetermined field of view, means to illuminate with a non-coherent light source a limited area of a surface to be analysed,

a light intensity detection device for producing a first electric signal directly related to the intensity of light detected by the fibre optic probe,

oscillator means to provide an excitation signal to the surface to be analysed,

means collecting the first electric signal and the excitation signal,

means to feed the output to an output monitor device whereby the vibration amplitude of the surface of the optic probe to be monitored is output to the output monitor device characterised in that it further includes:

a tracking filter which operates to eliminate background interference signals, whereby said tracking filter, receives the first electric signal and the excitation signal from the collecting means and provides an output to the feeding means.

In order that the invention may be fully understood preferred embodiments thereof will now be described with reference to the accompanying drawings in which:-

Fig. 1 is a functional block diagram of the preferred embodiment of the invention;

Figs. 2 and 3 illustrate the operation of the light probes.

Fig. 4 shows an alternative embodiment of the invention.

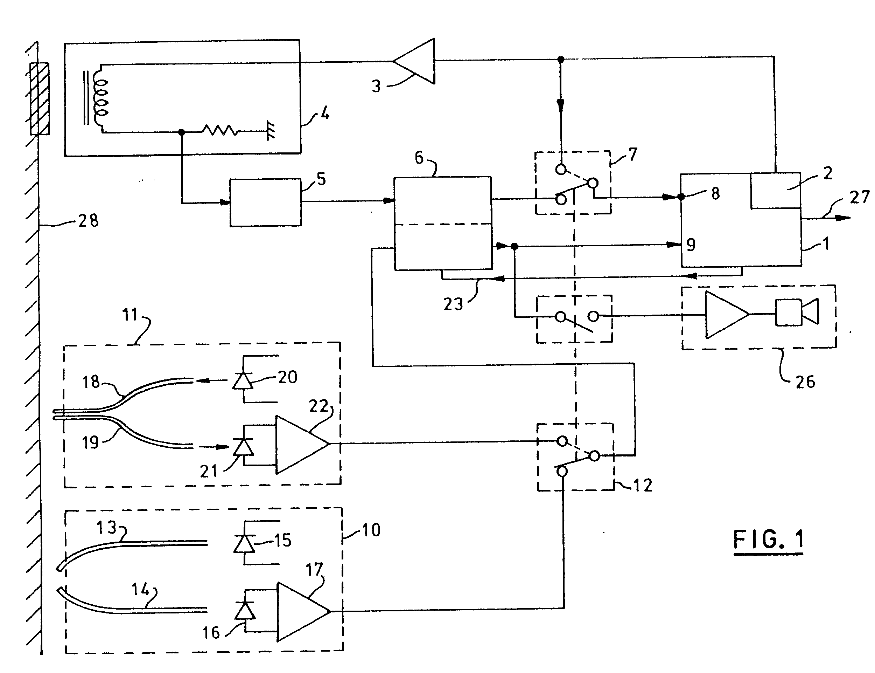

Referring now more particularly to Fig. 1 an optical vibration analyser having two modes of operation, analyse and search, is shown. The main component parts of the analyser are a transfer function analyser 1, which includes a sweep oscillator 2 connected through an excitation drive amplifier 3 to a vibration exciter 4.

The vibration exciter 4 is used to induce a known frequency $F_1$ oscillation in the machine part to be analysed for unwanted vibrations.

An output line from the vibration exciter 4 carries a voltage which is proportional to the acceleration of the induced vibration and is fed to a double integration circuit 5 to produce a voltage which is proportional to the position of the vibrating surface about a mean. The position voltage is fed to a double tracking filter 6 and acts as a reference voltage which in the analyse mode of operation is fed through a switch 7 to an input 8 of the transfer function analyser 1. In the search mode the switch 7 feeds the output of the sweep oscillator 2 to the input 8.

A second input 9 of the transfer function analyser 1 is derived from one of two optical probes 10 and 11. A switch 12 connects probe 10 or 11 to a second input of the dual tracking filter 6 depending upon the mode of operation. In the analyse mode probe 10 is connected, and in the search mode probe 11 is connected.

Probe 10 is an angled analyser probe comprising two fibre optic tubes 13 and 14 a gallium arsenide emitter diode 15 a photo sensitive diode 16 and a low noise amplifier 17.

Probe 11 is a parallel search probe comprising two fibre optic tubes 18 and 19, a gallium arsenide emitter diode 20, a photosensitive diode 21 and a low noise amplifier 22.

A frequency control signal is fed from the transfer function analyser 1 to the dual tracking filter on line 23. The output of the dual tracking filter derived from the probes is fed to input 9 of the transfer function analyser 1 and in search mode along line 24 through a switch 25 to an audible amplitude monitor 26.

The output of the transfer function analyser which is a voltage proportional to the amplitude of the input frequency is fed through a line 25 to a plotter or similar output display device.

The main advantage of the invention stems from the use of the noncoherent light generators 15 snd 20 as the sources of illumination of the vibrating surface. .

The analysis mode is used to provide the transfer function of the complete mechanical system. For this mode probe 10 is mounted at a fixed position. The transfer function analyser 1 receiving two inputs from the dual tracking filter 6 produces a plot of amplitude of detected vibrations.

The search mode is then used to isolate the source of fundamental resonance of each element in the system detected during the analysis mode. The audio output 26 is connected during the analysis mode and as the probe 11 is moved along the vibrating surface 28 so the audio output will reflect the location of the source of fundamental resonance.

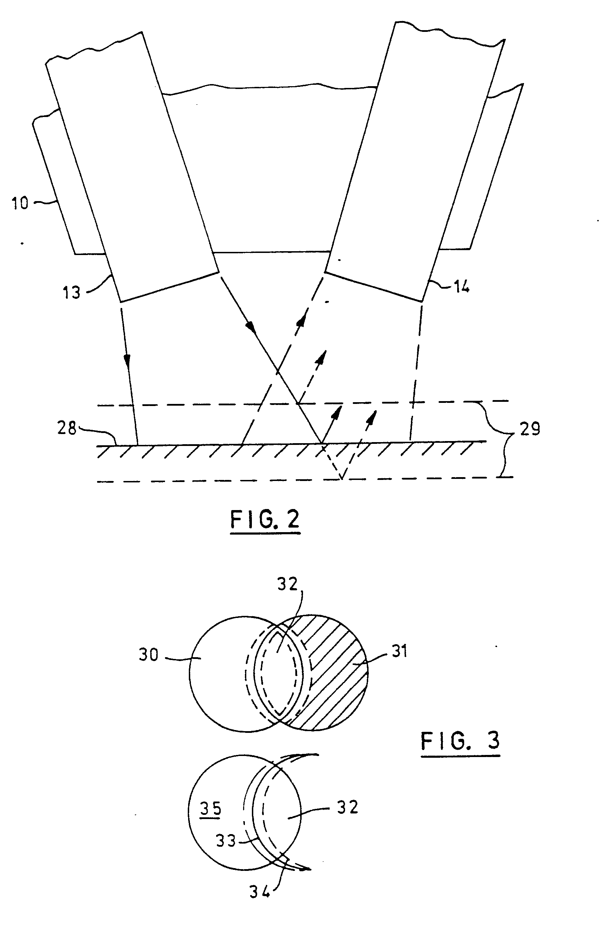

The operation of the light probes is illustrated in Figures 2 and 3.

The probe 10 is positioned close to the vibrating surface 28 which vibrates within the limits shown by the lines 29. The source fibre 13 illuminates an area 30 (Fig. 3) and the detection fibre 14, looks at an area 31 and receives light from an area 32 which is the overlap of 30 and 31.

The overlap area 32 will decrease and increase in size as the surface 28 approaches and retreats from the probe. Three stages of the variation are illustrated in Figure 3 in which the area 32 is smallest when the surface 28 is closest to the probe shown as line 34, the largest area is shown as line 35 when the surface is furthest away and the mean area is shown as line 33.

The amount of light detected by fibre 14 will vary in proportion to the variation in area 32 and consequently the detector diode 16 will produce a voltage proportional to the light area which is changing in proportion to the movement of the surface 28.

The dual tracking filter 6 receives a voltage proportional to the position of the vibrating surface 28 from the double integration circuit 5 as a reference as if no spurious vibrations are occurring and a voltage proportional to the actual position from either of the amplifiers 22 or 17.

The outputs to the transfer functions analyser 1 are compared and an output developed which is proportional to the difference between the two inputs. This may be displayed on an oscilloscope or a plotter.

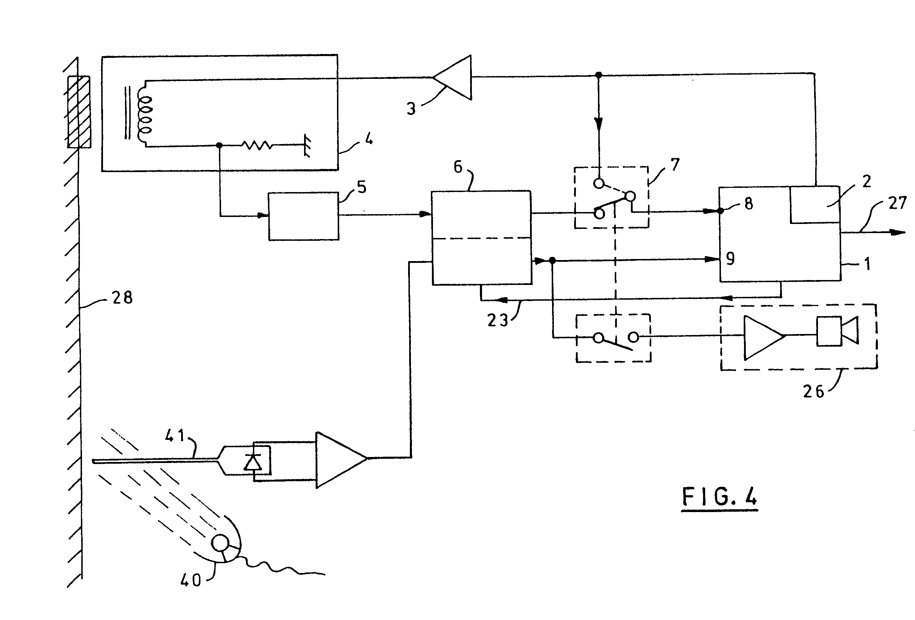

An alternative embodiment is shown in Figure 4 in which a white light source 40 is used to illuminate the surface 28 vibrations and only a single detecting fibre probe 41 is used. The operation of the embodiment is similar to the analysis mode of Figure 1 except that the variation in light detected is due to shadow areas created by surface discontinuities and texture differences.

The vibrating surface 28 shown in the drawings would normally not be flat, but made up of various angled elements and provide light and shaded areas.

## Claims

1. An optical analyser for measuring vibration of the order 2-4 microns, including a fibre optic probe (10, 11) having a predetermined field of view, means (15, 20) to illuminate with a noncoherent light source a limited area of a surface to be analysed,

a light intensity detection device (17, 22) for producing a first electric signal directly related to the intensity of light detected by the fibre optic probe,

oscillator means (4) to provide an excitation signal to the surface to be analysed,

means (6) collecting the first electric signal and the excitation signal,

means (23, 27) to feed the output to an output monitor device whereby the vibration amplitude of the surface of the optic probe (10, 11) to be monitored is output to the output monitor device characterised in that it further includes:

a tracking filter which operates to eliminate background interference signals, whereby said tracking filter, receives the first electric signal and the excitation signal from the collecting means (6) and provides an output to the feeding means (23, 27).

2. A vibration analyser as claimed in Claim 1 in which the illumination means includes a fibre optic tube mounted in a predetermined relation with the fibre optic probe whereby the relationship of the illuminated area and the field of view of the optic probe may be directly controlled.

3. A vibration analyser as claimed in Claim 1 or Claim 2 including a signal integration circuit for providing an electrical position signal indicative of the position of the surface to be measured relative to a start position and in which the tracking filter is a dual tracking filter and the position signal is fed to a third input of the tracking filter.

## Patentansprüche

1. Optischer Schwingungsanalysator zum Messen von Schwingungen innerhalb des Wellenlängenbereiches von 2-4 Mikrometer, mit einer Sonde (10, 11) aus einer optischen Faser mit vorgegebenem Sichtfeld, Einrichtungen (15, 20) zum Beleuchten eines begrenzten Bereiches einer zu analysierenden Oberfläche mittels einer nichtkohärenten Lichtquelle,

mit einem Lichtintensitätsdetektor (17, 22) zum Erzeugen eines ersten elektrischen Signals, welches in direktem Bezug zur Intensität des durch die Sonde aus optischer Faser detektierten Lichts steht,

mit einem Oszillator (4), der ein Erregersignal an die zu analysierende Oberfläche weitergibt,

mit einer Einrichtung (6) zum Zusammenfassen des ersten elektrischen Signals und des Erregersignals,

mit Einrichtungen (23, 27) zum Weiterleiten des Ausgangssignals an eine Ausgabe-Einheit, wodurch die Schwingungsamplitude der Oberfläche der zu überwachenden optischen Sonde (10, 11) an die Ausgabe-Einheit geschickt wird, gekennzeichnet durch

ein Nachlauffilter, welches Hintergrund-Interferenzsignale löscht, wobei das Nachlauffilter das erste elektrische Signal und das Erregersignal von der Sammeleinrichtung (6) erhält und ein Ausgangssignal an die Zuführeinrichtungen (23, 27) schickt.

2. Schwingungsanalysator nach Anspruch 1, dadurch gekennzeichnet, daß die Beleuchtungseinrichtung eine Röhre aus einer obtischen Faser enthält, welche in vorbestimmtem Verhältnis zu der Sonde aus einer optischen Faser angebracht ist, wodurch das Verhältnis des beleuchteten Bereichs und des Sichtfeldes der optischen Sonde direkt gesteuert werden kann.

3. Schwingungsanalysator nach Anspruch 1 oder 2 mit einer Signalintegrationsschaltung, welche ein elektrisches Positionssignal liefert, das die Position der zu messenden Oberfläche relativ zu einer Ausgangsposition anzeigt, dadurch gekennzeichnet, daß das Nachlauffilter ein Doppelfilter ist und daß das Positionssignal an einen dritten Eingang des Nachlauffilters geschickt wird.

**Revendications**

1. Analyseur optique pour mesurer des vibrations de l'ordre de 2 à 4 micromètres, comprenant une sonde (10, 11) à fibres optiques ayant un champ de vision prédéterminé, un moyen (15, 20) pour éclairer à l'aide d'une source de lumière non cohérente une zone limitée d'une surface à analyser,

un dispositif (17, 22) de détection d'intensité lumineuse pour produire un premier signal électrique directement lié à l'intensité lumineuse détectée par la sonde à fibres optiques,

un moyen formant oscillateur (4) pour fournir un signal d'excitation à la surface à analyser,

un moyen (6) recueillant le premier signal électrique et le signal d'excitation,

un moyen (23, 27) pour acheminer le signal de sortie jusqu'à un dispositif de contrôle de sortie par lequel l'amplitude des vibrations de la surface de la sonde optique (10, 11) à contrôler est fournie au dispositif de contrôle de sortie, caractérisé en ce qu'il comprend en outre:

un filtre de poursuite qui sert à éliminer les signaux parasites de fond, grâce à quoi ledit filtre de poursuite reçoit le premier signal électrique et le signal d'excitation issus du moyen (6) qui les a recueillis, et il fournit un signal de sortie au moyen d'acheminement (23, 27).

2. Analyseur de vibrations selon la revendication 1, dans lequel le moyen d'éclairage comprend un tube à fibres optiques monté d'une façon prédéterminée par rapport à la sonde à fibres optiques, grâce à quoi les relations entre la zone éclairée et le champ de vision de la sonde optique peuvent être directement réglées.

3. Analyseur de vibrations selon la revendication 1 ou la revendication 2, comprenant un circuit d'intégration de signaux pour produire un signal électrique de position indiquant la position de la surface à mesurer par rapport à une position de départ, et dans lequel le filtre de poursuite est un filtre de poursuite double et le signal de position est acheminé jusqu'à une troisième entrée du filtre de poursuite.

FIG. 1

EP 0 139 057 B1

EP 0 139 057 B1

FIG. 2

FIG. 3

2

FIG. 4